# EUROPEAN PATENT APPLICATION

(11) **EP 4 723 046 A1**
(43) Date of publication of application: **08.04.2026**
(21) Application number: 25187752.8
(22) Date of filing: 07.07.2025
(51) Int. Cl.: G06T 15/00

(54) **STREAMING TEXTURE DATA FOR GRAPHICALLY RENDERING A SCENE OF A VIDEO GAME**

(30) Priority: 17.07.2024 GB 202410444
(71) Applicant: Sony Interactive Entertainment Inc., Tokyo 108-0075 (JP)
(72) Inventor: Nguyen, Karo, London (GB); Cerrato, Maurizio, London (GB); Smith, Alexei Ashton Derek, London (GB)
(74) Representative: Gill Jennings & Every LLP

(57) **Abstract**

Described herein is a computer-implemented method for graphically rendering a scene of a video game, comprising: performing (102) a partial rendering of the scene; determining (104), based on the partial rendering of the scene, texture data required for performing a full rendering of the scene; streaming (106) the texture data from a storage to a memory; and performing (108), based on the streamed texture data, a full rendering of the scene.

## Description

### FIELD OF THE INVENTION

The present invention relates to systems and methods for streaming texture data for graphically rendering a scene of a video game. The present invention also relates to methods for displaying a scene of a video game.

### BACKGROUND

Modern video games are often associated with tens of or hundreds of gigabytes of graphics data. This quantity of data cannot feasibly be stored in a memory device of a video game console running the video game at any one time. This problem is typically solved by streaming the required graphics data for a current section of the video game being run. The required graphics data is streamed from storage to a memory of the console for the period in which it is needed. However, an issue associated with streaming graphics data is that it introduces latency. This is due to the time it takes between the required graphics data being requested and it being decompressed and copied from storage. The storage may be a storage device of the video game console or cloud storage, for example.

Graphics data usually comprises texture data, which often includes texture maps. Texture maps are images comprising detail, surface texture or colour to be mapped onto objects in the scene of a video game. Texture data is usually the largest portion of the graphics data associated with a video game. Generally, when specific texture data is needed to render a scene of the video game, a full texture map detailing textures for all possible perspective views of objects within the scene is streamed from storage to the console memory ready for use when rendering the scene. Issues associated with latency are therefore particularly prevalent when streaming texture data, as large amounts of data have to be requested and then decompressed and copied from storage.

Modern graphics processing units (GPUs) comprise specific built-in hardware for rendering textures. Prior to rendering textures, a GPU will typically attempt to fetch pixel data of textures to be rendered from a memory. If the pixel data is not yet in the memory, i.e. it has not yet been streamed from storage, the fetch will fail. In this scenario the pixel will be rendered with a plain colour or a lower mipmap level, with no textures. This is clearly undesirable.

Accordingly, there is a need to improve the streaming of texture data for graphically rendering a scene of a video game.

### SUMMARY OF INVENTION

In an aspect of the present invention there is provided a computer-implemented method for graphically rendering a scene of a video game, comprising: performing a partial rendering of the scene; determining, based on the partial rendering of the scene, texture data required for performing a full rendering of the scene; streaming the texture data from a storage to a memory; and performing, based on the streamed texture data, a full rendering of the scene.

In this way, issues associated with latency can be reduced, as only the required textures needed to render the full scene are streamed. A lesser quantity data has to be requested and then decompressed and copied from storage, therefore. Furthermore, the method of the present invention ensures that texture data required for performing a full rendering of the scene can always be fetched from memory.

As referred to herein, a scene is a 2D snapshot of a perspective view of a 3D video game environment. For example, if a specific perspective view of the video game environment is to be rendered, only the textures required to render the scene in that perspective need to be streamed. The need to stream a full texture map detailing all possible fields of view of the video game environment is therefore avoided. A lesser quantity of data therefore has to be streamed from storage to memory, thereby reducing issues associated with latency.

The storage may be a storage device of a video game console running the video game or a cloud storage. The memory may be a memory device of the video game console which is in communication with the storage.

The above-described method may be performed at run time of the video game. For example, whilst a fully rendered scene is being displayed, a future scene to be displayed can be partially rendered to determine the texture data required for performing a full rendering of that future scene. The determined texture data required for performing a full rendering of the future scene can be streamed prior to displaying the future scene. In various embodiments, a full rendering of the scene comprises applying textures to each object and/or aspect of the scene.

Preferably, performing a partial rendering of the scene comprises rendering a simplified version of the scene. The scene may be rendered at a reduced level of detail, at a lower resolution than that of a full rendering of the scene. In any case, the scene, or perspective view of the video game environment, is rendered sufficiently to determine the textures required to fully render the scene. The term "rendered sufficiently" can be taken to mean the minimum rendering detail required to determine the textures required to fully render the scene.

For example, in various embodiments, performing a partial rendering of the scene comprises rendering a portion of the objects within the scene. In this embodiment, an element of each object in the scene is rendered. In alternative embodiments, only some of the objects in the scene may be rendered. As described herein, the term "objects" can be taken to generally mean "aspects" of the scene.

Preferably, rendering a portion of the objects within the scene comprises rendering the outlines of objects in the scene. In this embodiment, the outlines of each of the objects in the scene are rendered. In alternative embodiments, only the outlines of some of the objects in the scene may be rendered.

In this way, it is possible to determine the textures required to fully render the objects in the scene. For example, from a portion of or the outline of an object, the orientation in which the object is facing in the scene can be determined. The textures required to fully render the object in that particular orientation can then be streamed. It has been found that it is not necessary to fully render the complete shape and details of an object in the scene in order to determine the textures required to fully render the details of the object for any one scene.

In various embodiments, the objects in the scene are represented by triangles, and rendering a portion of the objects within the scene comprises rendering a portion of the triangles representing the objects in the scene. Preferably, rendering a portion of the triangles representing the objects in the scene comprises rendering the triangles representing the outlines of the objects in the scene.

In this way, a sufficient quantity of the scene can be rendered in order to determine the textures required to perform a full render of the scene. As described above, it is not necessary to fully render the complete shape and details of an object in the scene in order to determine the textures required to fully render the details of the object for any one scene.

In various embodiments, the triangles representing the objects in the scene are rasterised at a lower resolution than that in a full rendering of the scene. In various embodiments, rendering a portion of the triangles representing the objects in the scene comprises rasterizing a portion of the triangles representing the objects in the scene. Preferably, rasterizing a portion of the triangles representing the objects in the scene comprises rasterising the triangles representing the outlines of the objects in the scene.

In this way, the determination of the required textures can be carried out more efficiently. It is not necessary to rasterise every triangle in the scene to determine the textures required to fully render the scene. It has been found that rasterising the triangles representing the outlines of the objects in the scene provides the most accurate indication of the minimum texture data required to fully render the scene.

In various embodiments, the partial rendering of the scene is performed by a geometry shader of a video game graphics pipeline. The role of a geometry shader is to generate triangles that represent the objects in the scene. The triangles are generated from 2D coordinates in the scene, the 2D coordinates representing positions of vertices of objects in the 3D video game environment.

In various embodiments, determining texture data required for performing a full rendering of the scene may comprise inspecting the 2D coordinates representing positions of vertices of objects in the 3D video game environment to determine the required textures. The determined required textures can then be passed to a streaming module which streams the required textures from storage prior to performing a full render of the textures. This step further comprises building a list of the determined required textures and/or mipmaps. The list can then be passed to the streaming module which streams the required textures as described. In this way, the required texture or pixel data can always be fetched from memory in order to render the textures required for the scene.

In various embodiments, determining texture data required for performing a full rendering of the scene may comprise inspecting a previous scene and comparing features of objects in the previous scene with those present in a current scene to determine if any additional textures are required to fully render the objects in the current scene. Specifically, the previous scene and the current scene to be rendered may be compared to determine whether a common object requires a higher or lower mipmap in the current scene.

As used herein, the term "mipmap" is intended to mean a sequence of a images, each of which representing textures of an object in a scene at a progressively lower resolution than that of the previous. A higher resolution mipmap image can be used to render textures of an object that is in the foreground of a scene, whereas a lower resolution mipmap image can be used to render textures of an object that is in the background of a scene.

In various embodiments, determining texture data required for performing a full rendering of the scene comprises: determining a portion of a full texture map sufficient to perform a full rendering of the scene; and streaming the texture data of only the determined portion of the full texture map. In this way, a lesser quantity of texture data has to be streamed from storage, thereby reducing issues associated with latency. In this context, the term "sufficient" is taken to mean the minimum portion of a full texture map required to perform a full rendering of the scene.

Preferably, determining a portion of a full texture map comprises selecting one or more texture maps associated with the objects in scene, based on which objects are visible in the scene, from a set of texture maps. In such an embodiment, a full texture map may comprise a set of texture maps each representing a different object or aspect of the scene.

In an alternative embodiment, determining a portion of a full texture map comprises selecting a portion of a full texture map associated with the objects in scene, based on which objects are visible in the scene. In such an alternative embodiment, a full texture map may be a single texture map representing each of the objects in the scene, and a portion of this texture map may be a particular section of this full texture map, for example.

In various embodiments, the method further comprises requesting, by a fragment shader, the determined texture data required for performing a full rendering of the scene to be streamed. The fragment shader requests the required texture data for performing a full rendering of the scene from the storage, whether this is a storage device of a video game console or a cloud storage. In other terms, a GPU of a computer attempts to fetch pixel data of the required texture data from storage to memory.

In various embodiments, the fragment shader may determine the texture data required for performing a full rendering of the scene. The fragment shader may then request the determined texture data required for performing a full rendering of the scene to be streamed. In this way, the speed of the graphics pipeline is improved in this case, as the fragment shader only needs to request the minimum textures required to perform a full rendering of the scene, as opposed to requesting a full texture map of the scene.

In various embodiments, streaming the texture data from a storage to a memory comprises decompressing the texture data and copying the texture data from the storage to the memory. Graphics data is often stored in a compressed format due to the quantity of graphics data associated with a video game. The compressed data must therefore be decompressed prior to being copied from the storage to the memory so that it can be read into the memory.

In another aspect of the invention there is provided a computer-implemented method for displaying a scene of a video game, comprising: displaying a current scene based on a full rendering of the current scene, the current scene fully rendered according to any of the various methods described herein. Preferably, the method further comprises: whilst displaying the current scene, performing any of the various methods described herein to fully render a future scene to be displayed.

In another aspect of the present invention there is provided a video game system, comprising: a memory device; and a processor configured to execute any of the various methods described herein.

Preferably, the video game system further comprises a storage for storing the texture data.

### BRIEF DESCRIPTION OF DRAWINGS

Embodiments of the invention will now be described, by way of example, by reference to the drawings, in which:
Figure 1 is a flow diagram of a computer-implemented method in an embodiment of the invention;
Figure 2 is a flow diagram of a computer-implemented method in another embodiment of the invention; and
Figure 3 is a flow diagram of a computer-implemented method in another embodiment of the invention.

### DETAILED DESCRIPTION

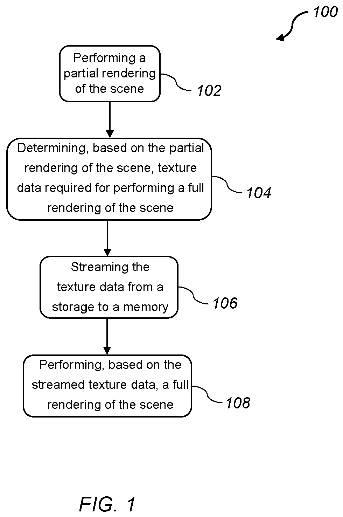

Figure 1 is a flow diagram of a computer-implemented method 100 in an embodiment of the invention. The method 100 comprises a first step 102 of performing a partial rendering of the scene and a second step 104 of determining, based on the partial rendering of the scene, texture data required for performing a full rendering of the scene. The method further comprises a third step 106 of streaming the texture data from a storage to a memory and a fourth step 108 of performing, based on the streamed texture data, a full rendering of the scene.

At step 102, a partial rendering of the scene is performed. In this embodiment, a partial rendering of the scene is an initial simplified version of the scene. The partial rendering of the scene provides the minimum quantity of data about the scene to enable a determination of the textures required to perform a full rendering of the scene. It has been found that it is not necessary to fully render a scene in order to determine the textures required for that scene. The partial rendering of the scene is not displayed. In various embodiments, partially rendering the scene may comprise rendering the scene at a reduced level of detail or rendering at a lower resolution than that of a full rendering of the scene.

At step 104, texture data required for performing a full rendering of the scene is determined based on the partial rendering of the scene. The objective of step 104 is the determine the minimum quantity of texture data required to fully render the scene. Typically, more texture data than is actually required is streamed in order to fully render the scene of a video game. By determining the texture data required for performing a full rendering of the scene, which is lesser in quantity than the texture data associated with a full texture map of the scene, less texture data is required to be streamed.

At step 106, the texture data is streamed from a storage to a memory. In this embodiment, the determined texture data required to perform a full render of the scene is streamed from a storage to a memory device of a video game console. The storage device maybe a hard drive of the video game console or a cloud storage.

At step 108, a full rendering of the scene is performed based on the streamed texture data. In this context, a full rendering of the scene produces a scene comprising full textures, or details, of objects within the scene, such as colour and surface details. The fully rendered scene is that which is ultimately to be displayed on a screen. The full render of the scene comprises all of the required textures determined at step 104 and streamed at step 106. Known methods for rendering a scene of video game stream more texture data than would actually be displayed on a screen. In this method, only the minimum quantity of textures required for the scene are actually streamed.

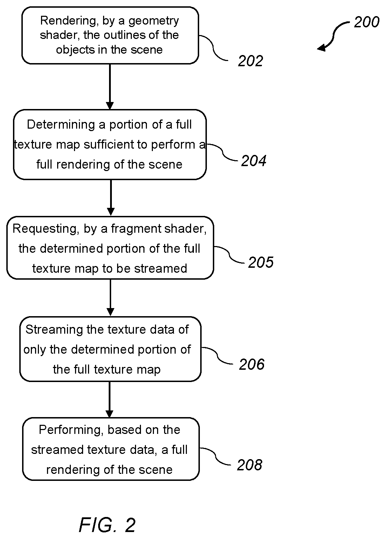

Figure 2 is a flow diagram of a computer-implemented method 200 in another embodiment of the invention. The method 200 comprises a first step 202 of rendering, by a geometry shader, the outlines of the objects in the scene and a second step 204 of determining a portion of a full texture map sufficient to perform a full rendering of the scene. The method 200 additionally comprises a third step 205 of requesting, by a fragment shader, the determined portion of the full texture map to be streamed. The method 200 further comprises a fourth step 206 of streaming the texture data of only the determined portion of the full texture map and a fifth step 208 of performing, based on the streamed texture data, a full rendering of the scene.

At step 202, the outlines of objects within the scene are rendered. In this embodiment, a partial rendering of the scene comprises rendering the outlines of objects within the scene. The objects, or aspects, of the scene are therefore not fully rendered. Step 202 is carried out by a geometry shader of a computer graphics pipeline. The purpose of a geometry shader in the computer graphics pipeline is to create shapes from 2D coordinates representing objects in the scene. Such shapes could be squares, triangles or lines, for example. These shapes depict the structure of objects within the scene, and the scene itself. The 2D coordinates representing objects in the scene are transformed from vertices at a prior step of the computer graphics pipeline. The vertices have 3D coordinates in a 3D video game environment. These are transformed to 2D coordinates in the scene, which is a particular 2D perspective view of the 3D video game environment.

In alternative embodiments, instead of rendering only the outlines of the objects in the scene, the objects could be partially rendered. This could include rendering internal details of the objects at a reduced resolution, for example.

At step 204, a portion of a full texture map sufficient to perform a full rendering of the scene is determined. In this context, a full texture map is that which depicts the complete textures of the objects in the scene, regardless of which perspective these objects are viewed in. In a scene of a video game, it is only possible to view a 2D projection of these objects. Therefore, some textures may not be visible in any given scene, depending on whether the objects are obscured by other aspects of the scene or not. In this embodiment, a sufficient portion of a full texture map is that which comprises the minimum complete texture data required to perform a full rendering of the scene. In other terms, a sufficient portion of a full texture map is that which comprises only the textures which would be visible in the scene. In various embodiments, a full texture map may be a set of texture maps or one complex map. In various embodiments, this step may additionally comprise building a list of textures representing the determined portion of the full texture map.

In alternative embodiments, this step may be achieved by inspecting a previous scene and comparing features of objects in the previous scene with those present in the current scene to determine if any additional textures are required to fully render the objects in the current scene. The previously obtained textures can then be used in conjunction with any additional textures required for the current scene to subsequently fully render the current scene.

At step 205, the determined portion of the full texture map to be streamed is requested by a fragment shader. At this step, the fragment shader receives the partial render of the scene, comprising the outlines of the objects, as an input.

The fragment shader requests the textures required to fully render these objects, based on the perspective view of the 3D video game environment depicted in the scene. Specifically, the fragment shader requests the specific texture data required to fully render the scene to be streamed from storage. In other terms, a GPU of a computer attempts to fetch pixel data of the required texture data from storage to memory.

In alternative embodiments, the determined required textures can then be passed to a streaming module which streams the required textures from storage prior to performing a full render of the textures. For example, the list representing the determined portion of the full texture map can be passed to the streaming module so that the streaming module can request the textures in the determined portion of the full texture map.

At step 206, the texture data of only the determined portion of the full texture map is streamed. Known methods for rendering a scene of video game stream more texture data than would actually be required. In this method, only the determined portion of the full texture map is streamed, thereby reducing the quantity of data required to be streamed.

At step 208, a full rendering of the scene is performed based on the streamed texture data in a similar manner to that of step 108 of the method 100. The streamed portion of the full texture map is used to full render the scene.

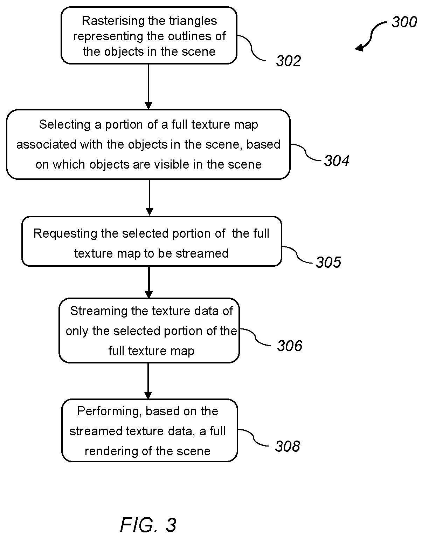

Figure 3 is a flow diagram of a computer-implemented method 300 in another embodiment of the invention. Figure 3 is a flow diagram of a computer-implemented method 300 in another embodiment of the invention. The method 300 comprises a first step 302 of rasterising the triangles representing the outlines of objects in the scene and a second step 304 of selecting a portion of a full texture map associated with the objects present in scene, based on which objects are visible in the scene. In addition to the method 100, the method 300 additionally comprises a third step 305 of requesting the selected portion of the full texture map to be streamed. The method 300 further comprises a fourth step 306 of streaming the texture data of only the selected portion of the full texture map and a fifth step 308 of performing, based on the streamed texture data, a full rendering of the scene.

At step 302, the triangles representing the outlines of objects in the scene are rasterised. In this embodiment, the shapes and details of objects in the scene are represented by triangles. Rasterizing a triangle comprises converting triangles into pixels that can be displayed on a screen. Therefore, the minimum textures required to perform a full rendering of the scene can be determined from a portion of the total number of pixels representing the scene.

In various embodiments, a partial rendering of the scene may comprise rendering a portion of the triangles representing objects in the scene. More specifically, this could comprise rendering the triangles representing the outlines of the objects in the scene. In particular, this may comprise rasterizing a portion of the triangles representing the objects in the scene.

At step 304, a portion of a full texture map associated with the objects in scene is selected based on which objects are visible in the scene. In this context, some objects may be obscured by others in the scene. This is because objects may obscure others in the 3D video game environment, depending on the perspective in which the environment is viewed. When the 3D environment is transformed to the scene as 2D projection, the textures that are not visible in that particular perspective are not needed. In known methods, these textures would usually be streamed regardless of whether they are visible or not, which results in an unnecessary quantity of data being streamed.

In this embodiment, a portion of a full texture map is selected. This portion of the texture map may be the only textures that can be seen in the 2D perspective of the 3D video game environment corresponding to the scene. In an alternative embodiment, texture maps associated with objects present in the scene may be selected based on which objects are visible in the scene from a set of texture maps. In such an embodiment, a full texture map would comprise a set of texture maps associated with various objects in the scene.

This may be achieved, for example, by inspecting a previous scene and comparing objects or portions thereof in the previous scene with those present in the current scene to determine if any additional objects or portions thereof are visible in the current scene that were not in the previous scene. Any additional textures required to fully render the newly visible objects or portions thereof in the current scene that were not required for the previous scene can therefore be determined. A corresponding portion of a full texture map can then be selected accordingly.

At step 305, the selected portion of the full texture map to be streamed is requested. Only the textures required to fully render the visible objects in the field of view of the of the video game environment depicted by the scene are requested to be streamed.

At step 306, the texture data of only the selected portion of the full texture map is streamed. As only a portion of the full texture map is streamed, a lesser quantity data is streamed overall compared to that in known methods, as described above.

At step 308, a full rendering of the scene is performed based on the streamed texture data in a similar manner to that of step 108 of the method 100. The streamed portion of the full texture map is used to full render the scene.

Normally, texture data and graphics data associated with a video game is stored in a storage device in a compressed format due to the size of the data files associated therewith. In such embodiments, steps 106, 206 and 306 of the methods 100, 200 and 300 described herein may additionally comprise decompressing the texture or graphics data stored in the storage device, and then copying the decompressed data from the storage device to the memory device of the video game console. This decompressed data can then be read into the memory device for use by a processor, such a graphics processing unit (GPU), of the video game console in fully rendering the scene.

The above method described methods 100, 200, 300 can be carried out at runtime whilst a previously fully rendered scene is being displayed. Future scenes to be displayed can be rendered using any of the above-described methods. For example, whilst a fully rendered scene is being displayed on a screen, any of the above-described methods can be executed for a future scene. A future scene can be partially rendered to then determine the textures required for performing a full render of that future scene. The data associated with the texture data for the future scene can be streamed and this future scene can be fully rendered before it is displayed. The above-described methods can be executed iteratively whilst a video game is being run to continuously fully render future scenes to be displayed.

## Claims

1. A computer-implemented method for graphically rendering a scene of a video game, comprising:
performing a partial rendering of the scene;
determining, based on the partial rendering of the scene, texture data required for performing a full rendering of the scene;
streaming the texture data from a storage to a memory; and
performing, based on the streamed texture data, a full rendering of the scene.

2. A computer-implemented method according to claim 1, wherein performing a partial rendering of the scene comprises rendering a simplified version of the scene.

3. A computer-implemented method according to claim 2, wherein rendering a simplified version of the scene comprises rendering the scene at a reduced level of detail.

4. A computer-implemented method according to claim 3, wherein rendering the scene at a reduced level of detail comprises rendering at a lower resolution than that of a full rendering of the scene.

5. A computer-implemented method according to any preceding claim, wherein performing a partial rendering of the scene comprises rendering a portion of the objects within the scene.

6. A computer-implemented method according to claim 5, wherein rendering a portion of the objects within the scene comprises rendering the outlines of the objects in the scene, or wherein the objects in the scene are represented by triangles, and wherein rendering a portion of the objects within the scene comprises rendering a portion of the triangles representing the objects in the scene.

7. A computer-implemented method according to claim 6, wherein rendering a portion of the triangles representing the objects in the scene comprises rendering the triangles representing the outlines of the objects in the scene, or wherein rendering a portion of the triangles representing the objects in the scene comprises rasterizing a portion of the triangles representing the objects in the scene.

8. A computer-implemented method according to claim 7, wherein rasterizing a portion of the triangles representing the objects in the scene comprises rasterising the triangles representing the outlines of the objects in the scene.

9. A computer-implemented method according to any preceding claim, wherein the partial rendering of the scene is performed by a geometry shader.

10. A computer-implemented method according to any preceding claim, wherein determining texture data required for performing a full rendering of the scene comprises:
determining a portion of a full texture map sufficient to perform a full rendering of the scene; and
streaming the texture data of only the determined portion of the full texture map.

11. A computer-implemented method according to claim 10, wherein determining a portion of a full texture map comprises selecting one or more texture maps associated with the objects in scene, based on which objects are visible in the scene, from a set of texture maps, or wherein determining a portion of a full texture map comprises selecting a portion of a full texture map associated with the objects in scene, based on which objects are visible in the scene.

12. A computer-implemented method according to any preceding claim, further comprising:
requesting, by a fragment shader, the determined texture data required for performing a full rendering of the scene to be streamed.

13. A computer-implemented method for displaying a scene of a video game, comprising:
displaying a current scene based on a full rendering of the current scene, the current scene fully rendered according to the method of any preceding claim.

14. A computer-implemented method according to claim 13, further comprising:
whilst displaying the current scene, performing the method of any of claims 1 to 12 to fully render a future scene to be displayed.

15. A video game system, comprising:
a memory device; and
a processor configured to execute the method of any of claims 1 to 12, or claims 13 or 14.
